# EUROPÄISCHE PATENTSCHRIFT

(11) **EP 1 249 619 B1**
(45) Veröffentlichungstag und Bekanntmachung des Hinweises auf die Patenterteilung: **04.08.2004**
(21) Anmeldenummer: 02006169.3
(22) Anmeldetag: 19.03.2002
(51) Int. Cl.: F15B 13/01

(54) **Ventileinheit mit entsperrbarem Rückschlagventil und damit ausgestatteter fluidbetätigter Antrieb**
Valve unit with pilot check valve and fluid actuator using the same
Unité de soupapes à clapet anti-retour piloté et actionneur à fluide équipé d'une telle unité

(30) Priorität: 14.04.2001 DE 20106511 U
(43) Veröffentlichungstag der Anmeldung: 16.10.2002
(73) Patentinhaber: Festo AG & Co, 73734 Esslingen (DE)
(72) Erfinder: Christiani, Peter, Dr., 72639 Neuffen (DE); Kauer, Evelyn, 73733 Esslingen (DE); Maninger, Rolf, 71364 Winnenden (DE)
(74) Vertreter: Abel, Martin, Dipl.-Ing.

(56) Entgegenhaltungen:
- EP-A- 0 844 401
- DE-A- 19 837 960
- US-A- 4 192 346
- US-A- 4 741 249

## Beschreibung

Die Erfindung betrifft eine Ventileinheit mit entsperrbarem Rückschlagventil, mit einem Ventilgehäuse, an dem ein erster und ein zweiter Arbeitsanschluss vorgesehen sind, die über einen Arbeitskanal miteinander verbunden sind, in den ein entsperrbares Rückschlagventil eingeschaltet ist, das durch ein fluidisches Steuersignal entsperrbar ist, welches an einem Signaleingangsanschluss des Ventilgehäuses eingespeist werden kann, wobei das entsperrbare Rückschlagventil so ausgebildet ist, dass es bei nicht vorhandenem fluidischem Steuersignal eine Fluidströmung vom ersten zum zweiten Arbeitsanschluss zulässt und in Gegenrichtung sperrt, mit einem zwischen dem ersten Arbeitsanschluss und dem entsperrbaren Rückschlagventil angeordneten Drosselrückschlagventil, dessen Rückschlagventil entweder eine Fluidströmung zum entsperrbaren Rückschlagventil zulässt und in Gegenrichtung verhindert, oder umgekehrt, und mit einem am Ventilgehäuse zusätzlich vorgesehenen und mit dem Arbeitskanal in Verbindung stehenden Signalausgangsanschluss.

Die Erfindung betrifft ferner einen mit zwei derartigen Ventileinheiten ausgestatteten fluidbetätigten Antrieb.

Aus der DE 19837960 A geht eine Ventileinheit der vorgenannten Art hervor, die zum Anschluss an einen fluidbetätigten Antrieb in Gestalt eines Arbeitszylinders ausgebildet ist. Über den ersten Arbeitsanschluss kann ein Betätigungsfluid eingespeist werden, das durch das entsperrbare Rückschlagventil hindurch über den zweiten Arbeitsanschluss in den Antrieb einströmt, um diesen in einer Richtung zu betätigen. Damit der Antrieb auch in der Gegenrichtung arbeiten kann, muss dem Betätigungsfluid ein Ausströmen durch die Ventileinheit ermöglicht werden, was durch ein mechanisches Entsperren des entsperrbaren Rückschlagventils geschieht. Hierzu wird über den Signaleingangsanschluss ein fluidisches Steuersignal eingespeist. Um den angeschlossenen Antrieb auch ohne ein Entsperren des Rückschlagventils entlüften zukönnen, ist eine Handentlüftungseinrichtung vorgesehen, die einen Entlüftungskanal aufweist, der zwischen dem zweiten Arbeitsanschluss und dem entsperrbaren Rückschlagventil an den die beiden Arbeitsanschlüsse verbindenden Arbeitskanal angeschlossen ist. Ein zwischen dem ersten Arbeitsanschluss und dem entsperrbaren Rückschlagventil angeordnetes Drosselrückschlagventil kann verwendet werden, um eine Geschwindigkeitssteuerung des angeschlossenen Antriebes hervorzurufen. Ist das Rückschlagventil beispielsweise so ausgeführt, dass es eine Fluidströmung zum entsperrbaren Rückschlagventil hin zulässt und in Gegenrichtung verhindert, lässt sich mit der Ventileinheit eine Abluftdrosselung realisieren. In entsprechender Weise ist eine Zuluftdrosselung möglich, wenn die Sperrrichtung des Rückschlagventils umgekehrt ist.

Üblicherweise ist ein Arbeitszylinder gleichzeitig mit zwei derartigen Ventileinheiten ausgestattet, wobei das der jeweils einen Ventileinheit zuzuführende fluidische Steuersignal von der zur jeweils anderen Ventileinheit führenden Fluidleitung abgezweigt wird. In diese Fluidleitung wird zu diesem Zweck üblicherweise ein T-Stück eingeschaltet, das einen Abzweig des fluidischen Steuersignals gestattet.

Die vorliegende Erfindung bezweckt eine Verringerung des mit dem Betrieb einer ein entsperrbares Rückschlagventil enthaltenden Ventileinheit verbundenen fluidtechnischen Installationsaufwandes.

Zur Lösung dieses Problems ist bei einer Ventileinheit der eingangs genannten Art vorgesehen, dass der Signalausgangsanschluss mit dem zwischen dem ersten Arbeitsanschluss und dem entsperrbaren Rückschlagventil verlaufenden Kanalabschnitt des Arbeitskanals verbunden ist.

Ein fluidbetätigter Antrieb wird zweckmäßigerweise mit zwei derart ausgebildeten Ventileinheiten bestückt, wobei der Signalausgangsanschluss der jeweils einen Ventileinheit über eine Fluidleitung mit dem Signaleingangsanschluss der jeweils anderen Ventileinheit verbunden ist.

Auf diese Weise erspart man sich den bisher zur Bereitstellung des fluidischen Steuersignals erforderlichen Installationsaufwand in Verbindung mit einer Reduzierung der Anzahl der benötigten Bauteile. Das für eine andere Ventileinheit benötigte fluidische Steuersignal kann unmittelbar an dem Signalausgangsanschluss abgegriffen werden, der als fester Bestandteil der Ventileinheit ausgebildet ist und somit nicht extra installiert werden muss. Bei einem mit zwei Ventileinheiten dieser Art ausgestatteten fluidbetätigten Antrieb wird somit auch der Montageaufwand beträchtlich reduziert, und es lässt sich eine äußerst kompakte Anordnung realisieren. Indem der Signalausgangsanschluss mit dem zwischen dem ersten Arbeitsanschluss und dem entsperrbaren Rückschlagventil verlaufenden Abschnitt des Arbeitskanals verbunden ist, ergibt sich ein optimales Ansprechverhalten, da das Steuersignal bereits zur Verfügung gestellt wird, noch bevor das entsperrbare Rückschlagventil durch den Fluiddruck des eingespeisten Betätigungsfluides geöffnet hat.

Vorteilhafte Weiterbildungen der Erfindung gehen aus den Unteransprüchen hervor.

zweckmäßigerweise steht der Signalausgangsanschluss mit dem zwischen dem ersten Arbeitsanschluss und dem Drosselrückschlagventil verlaufenden Abschnitt des Arbeitskanals in Verbindung.

Die Ventileinheit kann prinzipiell über ein einteiliges Ventilgehäuse verfügen. Bei einer bevorzugten Ausgestaltung ist allerdings eine mehrteilige Bauform vorgesehen, und zwar mit einem an einem Hauptkörper des Ventilgehäuses drehbar gelagerten Schwenkteil, wobei vorzugsweise sowohl der erste Arbeitsanschluss als auch der Signalausgangsanschluss gemeinsam an dem Schwenkteil ausgebildet sind.

Der zweite Arbeitsanschluss der Ventileinheit dient zweckmäßigerweise zum Anschließen an das Gehäuse eines fluidbetätigten Antriebes, wobei er mit einem Schraubgewinde versehen sein kann, das eine Einschraubbefestigung gestattet. Der erste Arbeitsanschluss hingegen ist zweckmäßigerweise für den lösbaren Anschluss einer Fluidleitung ausgebildet, über die das Betätigungsfluid zugeführt und abgeführt werden kann.

Der erste Arbeitsanschluss, der Signaleingangsanschluss und der Signalausgangsanschluss können insbesondere mit jeweils einer Steckverbindungseinrichtung ausgestattet sein, die eine lösbare Steckmontage einer Fluidleitung gestatten.

Besonders kompakte Abmessungen mit optimaler Zugänglichkeit lassen sich realisieren, wenn der erste Arbeitsanschluss und der Signalausgangsanschluss parallel zueinander ausgerichtet sind und nebeneinanderliegend angeordnet sind.

Nachfolgend wird die Erfindung anhand der beiliegenden Zeichnung näher erläutert. In dieser zeigen:
- Fig. 1: eine erste Bauform der erfindungsgemäßen Ventileinheit in einer Seitenansicht mit Blickrichtung gemäß Pfeil I aus Fig. 2 und 3,
- Fig. 2: einen Längsschnitt durch die Ventileinheit aus Fig. 1 gemäß Schnittlinie II-II,
- Fig. 3: einen Querschnitt durch die Ventileinheit aus Fig. 1 und 2 gemäß Schnittlinien III-III und
- Fig. 4: einen mit zwei Ventileinheiten der erfindungsge- mäßen Art ausgestatteten fluidbetätigten Antrieb in schematischer Darstellungsweise.

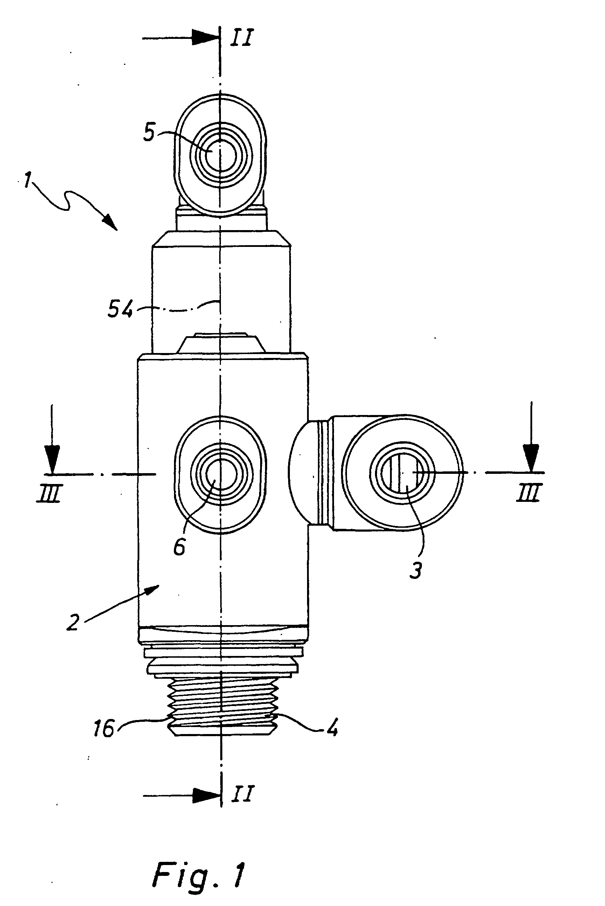

Die in Fig. 1 bis 3 gezeigte erfindungsgemäße Ventileinheit 1 besitzt ein Ventilgehäuse 2 mit insgesamt vier Fluidanschlüssen. Bei diesen Fluidanschlüssen handelt es sich um einen ersten Arbeitsanschluss 3, einen zweiten Arbeitsanschluss 4, einen Signaleingangsanschluss 5 und einen Signalausgangsanschluss 6.

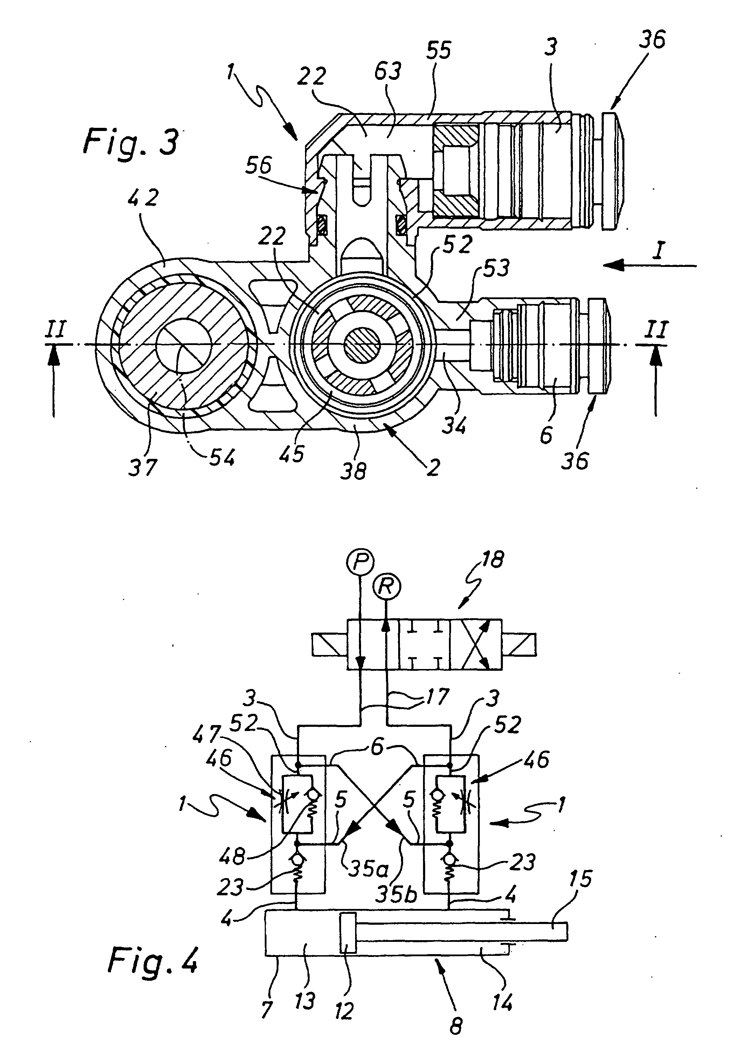

Der zweite Arbeitsanschluss 4 ist für den Anschluss an das Gehäuse 7 eines fluidbetätigten Antriebes 8 ausgebildet, wie er exemplarisch in Fig. 4 abgebildet ist. An die restlichen drei Anschlüsse kann jeweils eine insbesondere als Druckmittelschlauch ausgebildete Fluidleitung lösbar angeschlossen werden.

Zurückkommend auf Fig. 4, enthält der dort abgebildete fluidbetätigte Antrieb 8 einen in dem Gehäuse 7 verschiebbar gelagerten Kolben 12, der zwei Arbeitskammern 13, 14 dicht voneinander abteilt. Ein mit dem Kolben 12 bewegungsgekoppeltes Kraftabgriffsglied 15, vorliegend eine Kolbenstange, ermöglicht außerhalb des Gehäuses 7 einen Abgriff der Kolbenbewegung. Die Bewegung des Kolbens 12 wird durch gesteuerte Fluidbeaufschlagung der beiden Arbeitskammern 13, 14 bewirkt.

Der beim Ausführungsbeispiel als Linearantrieb in Gestalt eines Arbeitszylinders ausgebildete fluidbetätigte Antrieb 8 ist mit zwei Ventileinheiten 1 der erfindungsgemäßen Art ausgestattet. Diese sind in Fig. 4 nur symbolisch angedeutet und in der Praxis über ihren zweiten Arbeitsanschluss 4 unmittelbar an dem Gehäuse 7 des Antriebes 8 befestigt. Der zweite Arbeitsanschluss 4 ist zu diesem Zweck insbesondere mit einem Schraubgewinde 16 ausgestattet, das ein Einschrauben in eine komplementäre Anschlussbohrung des Gehäuses 7 gestattet.

Der erste Arbeitsanschluss 3 ermöglicht den Anschluss einer Fluidleitung 17, die gemäß Fig. 4 zu einem Steuerventil 18 führt, durch das wahlweise ein Einspeisen oder eine Abfuhr eines Betätigungsfluides in den bzw. aus dem ersten Arbeitsanschluss 3 hervorgerufen werden kann. Bei dem Betätigungsfluid handelt es sich insbesondere um Druckluft.

Bei einem mit zwei Ventileinheiten 1 ausgestatteten fluidbetätigten Antrieb 8 können die ersten Arbeitsanschlüsse 3 so mit dem Steuerventil 18 gekoppelt sein, dass jeweils bezüglich des einen ersten Arbeitsanschlusses 3 eine Fluideinspeisung und gleichzeitig bezüglich des anderen ersten Arbeitsanschlusses 3 eine Fluidabfuhr stattfindet. Das Steuerventil 18 kann wie abgebildet als Dreistellungsventil ausgebildet sein, um auch eine Neutralstellung vorgeben zu können, in der die beiden ersten Arbeitsanschlüsse 3 komplett abgesperrt sind.

Der erste und zweite Arbeitsanschluss 3, 4 stehen über einen im Innern des Ventilgehäuses 2 verlaufenden Arbeitskanal 22 in fluidischer Verbindung. Dieser Arbeitskanal 22 ist mehrfach abgewinkelt und bewirkt eine mehrfache Umlenkung des ihn durchströmenden Betätigungsfluides.

In den Arbeitskanal 22 ist ein mechanisch entsperrbares Rückschlagventil 23 eingeschaltet. Dieses ist so ausgeführt und angeordnet, dass es durch den Druck des über den ersten Arbeitsanschluss 3 eingespeisten Betätigungsfluides öffnet und dadurch ein Hindurchströmen des Betätigungsfluides zum zweiten Arbeitsanschluss 4 gestattet. Unter Vermittlung des Steuerventils 18 zugeführtes Betätigungsmedium kann auf diese Weise durch die Ventileinheit 1 hindurch in die angeschlossene Arbeitskammer 13, 14 einströmen.

In der Gegenrichtung sperrt das entsperrbare Rückschlagventil 23. Der am zweiten Arbeitsanschluss 4 anstehende Fluiddruck ist also unabhängig von seiner Höhe nicht in der Lage, das entsperrbare Rückschlagventil 23 zu öffnen.

Damit sich der Kolben 12 im Gehäuse 7 des Antriebes 8 bewegen kann, ist gleichzeitig mit der Fluidbeaufschlagung der jeweils einen Arbeitskammer 13 bzw. 14 ein Fluidablass aus der jeweils anderen Arbeitskammer 14, 13 erforderlich. Da dies auf Grund der Sperrwirkung des entsperrbaren Rückschlagventils 23 nicht ohne Weiteres möglich ist, wird das Rückschlagventil 23 durch Fremdbetätigung entsperrt, das heißt in die Offenstellung umgeschaltet. Dies geschieht durch Fluidbeaufschlagung mittels eines Fluides, das der Ventileinheit 1 über den Signaleingangsanschluss 5 immer dann eingespeist wird, wenn ein Entsperren des Rückschlagventils 23 gewünscht ist.

Im Innern des Ventilgehäuses 2 befindet sich eine Entsperreinrichtung 24 mit einem beispielsweise stößelartigen Entsperrglied 25, das in Verlängerung des durch eine Federeinrichtung 26 in die Schließstellung vorgespannten Ventilgliedes 27 des entsperrbaren Rückschlagventils 23 angeordnet ist. Das über den Signaleingangsanschluss 5 eingespeiste Fluid beaufschlagt einen kolbenartigen Endabschnitt 28 des Entsperrgliedes 25, das infolgedessen entgegen der Kraft einer Rückstellfeder 32 in Richtung zu dem Ventilglied 27 verlagert wird und dieses schließlich vom Ventilsitz 33 des Rückschlagventils 23 abhebt. Dadurch ist der Weg für das in einer Arbeitskammer 13, 14 eingesperrte Betätigungsfluid frei, um durch das entsperrte Rückschlagventil 23 hindurch zum ersten Arbeitsanschluss 3 auszuströmen.

Das Rückschlagventil 23 wird also durch ein fluidisches Steuersignal entsperrt, das über den Signaleingangsanschluss 5 zugeführt wird. Wird dieses Steuersignal weggenommen, kehrt das Entsperrglied 25 in die Ausgangsstellung zurück, so dass auch das entsperrbare Rückschlagventil 23 wieder in die Schließstellung zurückkehrt.

Ein besonderer Vorteil der erfindungsgemäßen Ventileinheit 1 besteht darin, dass sie mit dem schon erwähnten Signalausgangsanschluss 6 ausgestattet ist. Dieser steht über einen Abzweigkanal 34 in ständiger Fluidverbindung mit dem Arbeitskanal 22. Der im Arbeitskanal 22 herrschende Druck steht folglich auch am Signalausgangsanschluss 6 an.

Werden gemäß der in Fig. 4 gezeigten fluidtechnischen Verschaltung zwei Ventileinheiten 1 in Verbindung mit einem fluidbetätigten Antrieb 8 eingesetzt, kann mittels jeweils einer Fluidleitung 35a, 35b der Signalausgangsanschluss 6 einer jeweiligen Ventileinheit mit dem Signaleingangsanschluss 5 der jeweils anderen Ventileinheit fluidisch verbunden werden.

Wird nun am ersten Arbeitsanschluss 3 einer Ventileinheit 1 Betätigungsfluid eingespeist, das durch die betreffende Ventileinheit 1 hindurch in die angeschlossene Arbeitskammer des Antriebes 8 strömen kann, gelangt gleichzeitig ein über den Signalausgangsanschlusse 6 der Ventileinheit 1 vom zugehörigen Arbeitskanal 22 abgezweigtes fluidisches Steuersignal zum Signaleingangsanschluss 5 der anderen Ventileinheit, so dass deren entsperrbares Rückschlagventil 23 entsperrt wird und aus der zugeordneten Arbeitskammer Druckmedium entweichen kann.

Da der Signalausgangsanschluss 6 ein unmittelbarer Bestandteil der Ventileinheit 1 ist, ist der fluidtechnische Installationsaufwand äußerst gering. Man kann insbesondere darauf verzichten, in die jeweils an den ersten Arbeitsanschluss 3 herangeführte Fluidleitung 17 ein T-Stück einzusetzen, um von dort das fluidische Steuersignal abzunehmen.

Zweckmäßigerweise sind sowohl der erste Arbeitsanschluss 3 als auch der Signaleingangsanschluss 5 und der Signalausgangsanschluss 6 mit einer Steckverbindungseinrichtung 36 ausgestattet, die eine lösbare Steckmontage der anzuschließenden Fluidleitung ermöglicht.

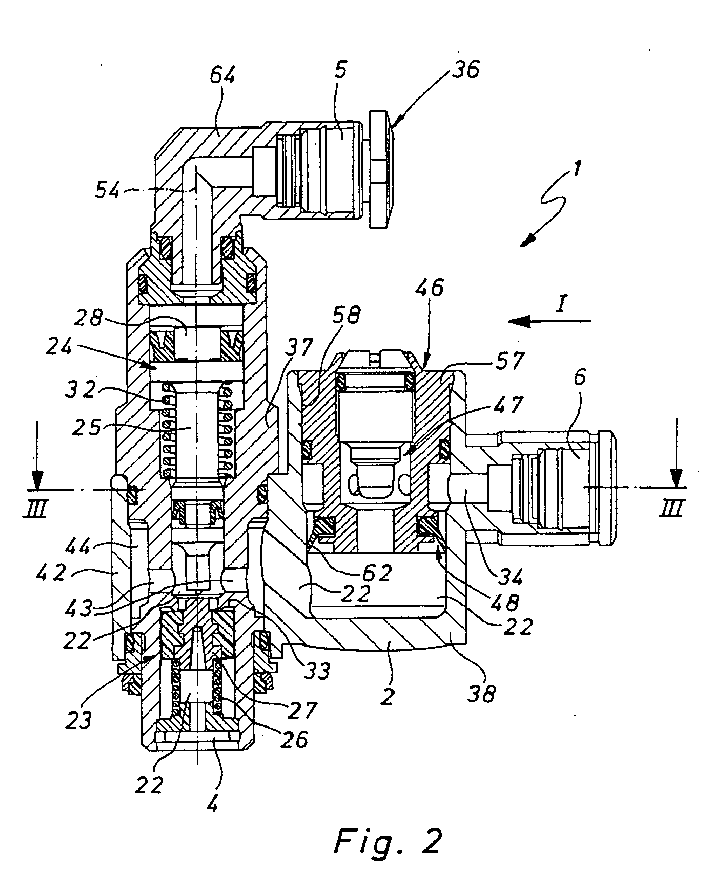

Das Ventilgehäuse 2 der beispielsgemäßen Ventileinheit 1 ist mehrteilig ausgebildet. Es enthält einen länglichen Hauptkörper 37, der am einen Ende mit dem zweiten Arbeitsanschluss 4 und am anderen, in Fig. 1 und 2 nach oben weisenden Ende mit dem Signaleingangsanschluss 5 versehen ist. An diesem Hauptkörper 37 ist ein Schwenkteil 38 des Ventilgehäuses 2 drehbar gelagert, das über einen ringförmigen Lagerungsabschnitt 42 verfügt, der drehbar auf dem Hauptkörper 37 sitzt. Der erste Arbeitsanschluss 3 und der Signalausgangsanschluss 6 sind gemeinsam an dem Schwenkteil 38 angeordnet und können daher durch Verschwenken des Schwenkteils 38 gemeinsam in jeder beliebigen Winkelstellung bezüglich des Hauptkörpers 37 positioniert werden.

Besonders vorteilhaft ist die aus Fig. 3 gut ersichtliche Anordnung, bei der der erste Arbeitsanschluss 3 und der Signalausgangsanschluss 6 parallel zueinander ausgerichtet sind und vorzugsweise auch nebeneinanderliegend angeordnet sind. Ungeachtet von der momentanen Schwenkposition sind somit diese beiden Fluidanschlüsse stets gleich ausgerichtet und ermöglichen einen bequemen Anschluss einer abgehenden Fluidleitung.

Das entsperrbare Rückschlagventil 23 befindet sich zusammen mit der Entsperreinrichtung 24 im Innern des Hauptkörpers 37. Der Arbeitskanal 22 verläuft ausgehend vom zweiten Arbeitsanschluss 4 zunächst ein Stück weit koaxial im Innern des Hauptkörpers 37, wobei er nach dem entsperrbaren Rückschlagventil 23 über radial verlaufende Zweigkanäle 43 in einen konzentrisch zwischen dem Hauptkörper 37 und dem Lagerungsabschnitt 42 angeordneten Ringraum 44 übergeht, von wo aus dann der weitere Verlauf im Innern des Schwenkteils 38 zum ersten Arbeitsanschluss 3 führt.

Der Signalausgangsanschluss 6 ist über den schon erwähnten Abzweigkanal 34 zweckmäßigerweise mit dem zwischen dem ersten Arbeitsanschluss 3 und dem entsperrbaren Rückschlagventil 23 verlaufenden Kanalabschnitt 45 des Arbeitskanals 22 verbunden. Der über den ersten Arbeitsanschluss 3 eingespeiste Fluiddruck steht somit praktisch unmittelbar am Signalausgangsanschluss 6 an und steht verzögerungsfrei als fluidisches Steuersignal zur Verfügung.

Als weiteres Merkmal verfügt die Ventileinheit 1 beim Ausführungsbeispiel zusätzlich noch über ein Drosselrückschlagventil 46. Dieses enthält, in Parallelschaltung, eine in der Drosselungsintensität vorzugsweise variabel einstellbare Drosseleinrichtung 47 und ein Rückschlagventil 48.

Das Drosselrückschlagventil 46 ist in den zuvor erwähnten Kanalabschnitt 45 eingeschaltet und sitzt zweckmäßigerweise in dem Schwenkteil 38 mit radialem Abstand zum Hauptkörper 37.

Beim Ausführungsbeispiel ist das Rückschlagventil 48 so ausgeführt, dass es eine Fluidströmung vom ersten Arbeitsanschluss 3 zum entsperrbaren Rückschlagventil 23 zulässt und in Gegenrichtung sperrt. Das über den ersten Arbeitsanschluss 3 eingespeiste Betätigungsfluid kann somit ungehindert durch die Ventileinheit 1 hindurchströmen, während bei entgegengesetzter Strömungsrichtung ein nur gedrosseltes Abströmen möglich ist, so dass auf diese Weise eine Einflussnahme auf die Verfahrgeschwindigkeit des Kolbens 12 des Antriebes 8 möglich ist.

Prinzipiell könnte das Rückschlagventil 48 auch mit umgekehrter Sperrrichtung ausgebildet werden, um anstelle einer so genannten Abluftdrosselung eine Zuluftdrosselung zu ermöglichen.

Die fluidische Verbindung zwischen dem Signalausgangsanschluss 6 und dem Kanalabschnitt 45 erfolgt zweckmäßigerweise in demjenigen Kanalabschnitt 52 des Arbeitskanals 22, der zwischen dem Drosselrückschlagventil 46 und dem ersten Arbeitsanschluss 3 verläuft. Dadurch ist wiederum eine unmittelbare Verbindung zwischen dem ersten Arbeitsanschluss 3 und dem Signalausgangsanschluss 6 gewährleistet.

Wie aus Fig. 3 hervorgeht, kann das Schwenkteil 38 mehrteilig ausgebildet sein. Es verfügt dort über ein den Lagerungsabschnitt 42 aufweisendes Hauptteil 53, das quer von der die Drehachse des Schwenkteils 38 definierenden Längsachse 54 des Hauptkörpers 37 wegragt. Der Signalausgangsanschluss 6 ist ein unmittelbarer Bestandteil des Hauptteils 53. Der erste Arbeitsanschluss 3 hingegen ist an einem eigenständigen Anschlussteil 55 vorgesehen, das im Rahmen einer Steckverbindung 56 unter Abdichtung an dem Hauptteil 53 fixiert ist. Die Steckverbindung 56 kann so ausgebildet sein, dass das Anschlussteil 55 relativ zum Hauptteil 53 verschwenkt werden kann.

Beim Ausführungsbeispiel ist das Anschlussteil 55 seitlich an das Hauptteil 53 angesteckt, wobei letzteres einen geeigneten Aufsteckstutzen besitzt. Indem die Steckverbindung 56 seitlich an dem Anschlussteil 55 vorgesehen ist, ergibt sich insgesamt eine abgewinkelte Anordnung, so dass die Parallelausrichtung der beiden Arbeitsanschlüsse 3, 4 gewährleistet werden kann.

Das Drosselrückschlagventil 46 sitzt zweckmäßigerweise im Hauptteil 53 des Schwenkteils 38. Dabei enthält das Drosselrückschlagventil 46 eine Patrone 57, die in eine Aufnahme 58 des Schwenkteils 38 eingesteckt ist und die zum einen die Drosseleinrichtung 47 enthält und zum anderen mit dem Ventilglied 62 des Rückschlagventils 48 ausgestattet ist. Bei dem Ventilglied 62 handelt es sich um eine biegbare Dichtlippe, die mit einem von der Umfangsfläche der Aufnahme 58 gebildeten Ventilsitz zusammenarbeitet.

Der vom ersten Arbeitsanschluss 3 abgehende Eingangsabschnitt 63 des Arbeitskanals 22 mündet, wie auch der zum Signalausgangsanschluss 6 führende Abzweigkanal 34, seitlich in die Aufnahme 58 ein.

Zum Signaleingangsanschluss 5 ist noch nachzutragen, dass dieser gemäß Fig. 2 an einem Winkelstück 64 vorgesehen sein kann, das am Hauptkörper 37 gelagert ist, beispielsweise in verschwenkbarer Weise. Die Anordnung kann ferner so getroffen sein, dass der Signaleingangsanschluss 5 wie auch der erste Arbeitsanschluss 3 und der Signalausgangsanschluss 6 rechtwinkelig zur Längsachse 54 des Hauptkörpers 37 des Ventilgehäuses 2 orientiert sind.

## Patentansprüche

1. Ventileinheit mit entsperrbarem Rückschlagventil, mit einem Ventilgehäuse (2), an dem ein erster und ein zweiter Arbeitsanschluss (3, 4) vorgesehen sind, die über einen Arbeitskanal (22) miteinander verbunden sind, in den ein entsperrbares Rückschlagventil (23) eingeschaltet ist, das durch ein fluidisches Steuersignal entsperrbar ist, welches an einem Signaleingangsanschluss (5) des Ventilgehäuses (2) eingespeist werden kann, wobei das entsperrbare Rückschlagventil (23) so ausgebildet ist, dass es bei nicht vorhandenem fluidischem Steuersignal eine Fluidströmung vom ersten zum zweiten Arbeitsanschluss (3, 4) zulässt und in Gegenrichtung sperrt, mit einem zwischen dem ersten Arbeitsanschluss (3) und dem entsperrbaren Rückschlagventil (23) angeordneten Drosselrückschlagventil (46), dessen Rückschlagventil (48) entweder eine Fluidströmung zum entsperrbaren Rückschlagventil (23) zulässt und in Gegenrichtung verhindert, oder umgekehrt, und mit einem am Ventilgehäuse (2) zusätzlich vorgesehenen und mit dem Arbeitskanal (22) in Verbindung stehenden Signalausgangsanschluss (6), **dadurch gekennzeichnet, dass** der Signalausgangsanschluss (6) mit dem zwischen dem ersten Arbeitsanschluss (3) und dem entsperrbaren Rückschlagventil (23) verlaufenden Kanalabschnitt (45) des Arbeitskanals (22) verbunden ist.

2. Ventileinheit nach Anspruch 1, **dadurch gekennzeichnet, dass** der Signalausgangsanschluss (6) mit dem zwischen dem ersten Arbeitsanschluss (3) und dem Drosselrückschlagventil (46) verlaufenden Kanalabschnitt (52) des Arbeitskanals (22) verbunden ist.

3. Ventileinheit nach Anspruch 1 oder 2, **dadurch gekennzeichnet, dass** der erste Arbeitsanschluss (3) und der Signalausgangsanschluss (6) gemeinsam an einem Schwenkteil (38) angeordnet sind, das an einem Hauptkörper (37) der Ventileinheit (1) drehbar gelagert ist, der den zweiten Arbeitsanschluss (4) und den Signaleingangsanschluss (5) aufweist.

4. Ventileinheit nach einem der Ansprüche 1 bis 3, **dadurch gekennzeichnet, dass** der erste Arbeitsanschluss (3) für den lösbaren Anschluss einer Fluidleitung (17) und der zweite Arbeitsanschluss (4) für den Anschluss an das Gehäuse (7) eines fluidbetätigten Antriebes (8) ausgebildet ist, wobei der zweite Arbeitsanschluss (4) zweckmäßigerweise mit einem Schraubgewinde (16) versehen ist.

5. Ventileinheit nach einem der Ansprüche 1 bis 4, **dadurch gekennzeichnet, dass** der erste Arbeitsanschluss (3), der Signaleingangsanschluss (5) und der Signalausgangsanschluss (6) jeweils mit einer eine Steckmontage einer Fluidleitung gestattenden Steckverbindungseinrichtung (36) ausgestattet sind.

6. Ventileinheit nach einem der Ansprüche 1 bis 5, **dadurch gekennzeichnet, dass** der erste Arbeitsanschluss (3) und der Signalausgangsanschluss (6) parallel zueinander ausgerichtet sind und zweckmäßigerweise nebeneinander liegen.

7. Fluidbetätigter Antrieb, der mit zwei Ventileinheiten (1) nach einem der Ansprüche 1 bis 6, ausgestattet ist, wobei der Signalausgangsanschluss (6) der jeweils einen Ventileinheit (1) über eine Fluidleitung (35a, 35b) mit dem Signaleingangsanschluss (5) der jeweils anderen Ventileinheit (1) verbunden ist.

## Claims

1. Valve unit with pilot-operated check valve, with a valve housing (2) provided with a first and a second working port (3, 4) connected to one another by a working passage (22) in which a pilot-operated check valve (23) is installed which can be opened by a fluidic control signal which can be fed into a signal input port (5) of the valve housing (2), the pilot-operated check valve (23) being so designed that it allows a fluid flow from the first to the second working port (3, 4) when there is no fluidic control signal while blocking it in the opposite direction, with a return-orifice check valve (46) located between the first working port (3) and the pilot-operated check valve (23), the check valve (48) of which allows a fluid flow to the pilot-operated check valve (23) while blocking it in the opposite direction or vice versa, and with a signal output port (6) additionally provided on the valve housing (2) and connected to the working passage (22), **characterised in that** the signal output port (6) is connected to the section (45) of the working passage (22) which runs between the first working port (3) and the pilot-operated check valve (23).

2. Valve unit according to claim 1, **characterised in that** the signal output port (6) is connected to the section (52) of the working passage (22) which runs between the first working port (3) and the return-orifice check valve (46).

3. Valve unit according to claim 1 or 2, **characterised in that** the first working port (3) and the signal output port (6) are together located on a swivel part (38) pivoted on a main body (37) ofthe valve unit (1) which features the second working port (4) and the signal input port (5).

4. Valve unit according to any of claims 1 to 3, **characterised in that** the first working port (3) is designed for the releasable connection of a fluid line (17) and the second working port (4) is designed for connection to the housing (7) of a fluid-operated drive (8), the second working port (4) being expediently provided with a screw thread (16).

5. Valve unit according to any of claims 1 to 4, **characterised in that** the first working port (3), the signal input port (5) and the signal output port (6) are each provided with a plug-in fitting (36) for the installation of a fluid line.

6. Valve unit according to any of claims 1 to 5, **characterised in that** the first working port (3) and the signal output port (6) are arranged parallel to one another and expediently adjacent to one another.

7. Fluid-operated drive fitted with two valve units (1) according to any of claims 1 to 6, wherein the signal output port (6) of the one valve unit (1) is connected to the signal input port (5) of the other valve unit (1) by a fluid line (35a, 35b) respectively.

## Revendications

1. Unité de soupape avec clapet de non-retour déverrouillable, avec une cage de soupape (2) sur laquelle sont prévus un premier raccord de travail (3) et un deuxième raccord de travail (4), lesquels sont reliés entre eux par un canal de travail (22) dans lequel est monté un clapet de non-retour (23) déverrouillable qui peut être déverrouillé par un signal de commande fluidique, lequel peut être envoyé à un raccord d'entrée de signal (5) de la cage de soupape (2), le clapet de non-retour (23) déverrouillable étant conçu de manière qu'en l'absence d'un signal de commande fluidique, il autorise un écoulement du fluide du premier raccord de travail (3) vers le deuxième raccord de travail (4) et l'interdit en sens contraire, avec un clapet de non-retour d'étranglement (46) disposé entre le premier raccord de travail (3) et le clapet de non-retour (23) déverrouillable, dont le clapet de non-retour (48) soit autorise un écoulement du fluide vers le clapet de non-retour déverrouillable (23) et l'empêche en sens contraire, soit inversement, et avec un raccord de sortie de signal (6) supplémentaire prévu sur la cage de soupape (2) et communiquant avec le canal de travail (22), **caractérisée en ce que** le raccord de sortie de signal (6) est relié au tronçon de canal (45), s'étendant entre le premier raccord de travail (3) et le clapet de non-retour déverrouillable (23), du canal de travail (22).

2. Unité de soupape selon la revendication 1, **caractérisée en ce que** le raccord de sortie de signal (6) est relié au tronçon de canal (52), s'étendant entre le premier raccord de travail (3) et le clapet de non-retour d'étranglement (46), du canal de travail (22).

3. Unité de soupape selon la revendication 1 ou 2, **caractérisée en ce que** le premier raccord de travail (3) et le raccord de sortie de signal (6) sont disposés ensemble sur une pièce pivotante (38) qui est montée tournante sur un corps principal (37) de l'unité de soupape (1), lequel comporte le deuxième raccord de travail (4) et le raccord d'entrée de signal (5).

4. Unité de soupape selon l'une des revendications 1 à 3, **caractérisée en ce que** le premier raccord de travail (3) est conçu pour le raccordement séparable d'une conduite pour fluide (17) et le deuxième raccord de travail (4) pour le raccordement au carter (7) d'un dispositif d'entraînement (8) actionné par fluide, le deuxième raccord de travail (4) étant avantageusement pourvu d'un filetage pour vis (16).

5. Unité de soupape selon l'une des revendications 1 à 4, **caractérisée en ce que** le premier raccord de travail (3), le raccord d'entrée de signal (5) et le raccord de sortie de signal (6) sont équipés chacun d'un dispositif de liaison par emboîtement (36) autorisant un montage par emboîtement d'une conduite de fluide.

6. Unité de soupape selon l'une des revendications 1 à 5, **caractérisée en ce que** le premier raccord de travail (3) et le raccord de sortie de signal (6) sont orientés parallèlement l'un à l'autre et se situent avantageusement l'un à côté de l'autre.

7. Dispositif d'entraînement actionné par fluide qui est équipé de deux unités de soupape (1) selon l'une des revendications 1 à 6, le raccord de sortie de signal (6) d'une unité de soupape (1) étant relié, par une conduite de fluide (35a, 35b), au raccord d'entrée de signal (5) de l'autre unité de soupape (1).
